# EUROPÄISCHE PATENTSCHRIFT

(11) **EP 2 601 010 B1**
(45) Veröffentlichungstag und Bekanntmachung des Hinweises auf die Patenterteilung: **16.07.2014**
(21) Anmeldenummer: 11775931.6
(22) Anmeldetag: 14.10.2011
(51) Int. Cl.: B21J 1/04, B23P 15/02, B21D 53/78, F01D 5/14, B21K 1/12, B21J 1/02, B21K 1/06

(54) **HERSTELLUNG VON SCHAUFELN EINER STRÖMUNGSMASCHINE AUS KALTUMFORMTEN GRUNDMATERIAL**
PRODUCTION OF BLADES OF A TURBOMACHINE FROM COLD-FORMED BASE MATERIAL
FABRICATION D'AUBES D'UNE TURBOMACHINE À PARTIR D'UN MATÉRIAU DE BASE FORMÉ À FROID

(30) Priorität: 18.10.2010 DE 102010042585
(43) Veröffentlichungstag der Anmeldung: 12.06.2013
(73) Patentinhaber: Siemens Aktiengesellschaft, 80333 München (DE)
(72) Erfinder: BERENDT, Oliver, 02826 Görlitz (DE); HAJE, Detlef, 02828 Görlitz (DE)
(86) Internationale Anmeldenummer: PCT/EP2011/067965
(87) Internationale Veröffentlichungsnummer: WO 2012/052359

(56) Entgegenhaltungen:
- EP-A1- 0 827 807
- DE-A1- 2 228 454
- DATABASE WPI Week 201017 Thomson Scientific, London, GB; AN 2010-C20590 XP002665802, -& RU 2 381 083 C1 (VSMPO-AVISMA CORP STOCK CO) 10. Februar 2010 (2010-02-10)
- DATABASE WPI Week 200543 Thomson Scientific, London, GB; AN 2005-422942 XP002665803, -& RU 2 254 200 C1 (MOSC SALYUT MECH ENG PRODN ENTERPRISE) 20. Juni 2005 (2005-06-20)
- DATABASE WPI Week 200537 Thomson Scientific, London, GB; AN 2005-363902 XP002665804, -& RU 2 252 835 C1 (MOSC SALYUT MECH ENG PRODN ENTERPRISE) 27. Mai 2005 (2005-05-27)
- DEY H J: "Blatt für Blatt zur exakten Profilkontur", WERKSTATT UND BETRIEB, CARL HANSER VERLAG GMBH & CO. KG, DE, Bd. 142, Nr. 9, 1. September 2009 (2009-09-01), Seiten 40-42, XP001549090, ISSN: 0043-2792

## Beschreibung

Die vorliegende Erfindung befasst sich mit einem Verfahren zur Herstellung einer Schaufel einer Strömungsmaschine.

Die Schaufeln von Strömungsmaschinen, zum Beispiel Dampfturbinen, Gasturbinen oder Verdichtern, sind während des Betriebes der Strömungsmaschinen hohen Belastungen ausgesetzt. So werden beispielsweise bei den Schaufeln einer Dampfturbine am Ende des Expansionsbereiches, den sogenannten Niederdruckschaufeln, besonders hohe Anforderungen an die Festigkeit des verwendeten Werkstoffes der Schaufeln gestellt. Dies liegt darin begründet, dass die von den Niederdruckschaufeln überstrichene Kreisringfläche bei einer vorgegebenen Drehzahl möglichst groß sein soll. Um dieser Anforderung zu genügen, werden die Schaufeln möglichst lang ausgeführt. Neben weiteren Faktoren ist hier vor allem die auftretende Fliehkraftspannung der Schaufeln eine limitierende Größe für die mögliche Länge der Schaufeln. Dies liegt darin begründet, dass die als Werkstoffe für Niederdruckschaufeln verwendeten Stahlwerkstoffe eine begrenzte ertragbare Spannung aufweisen. Eine Erhöhung der ertragbaren Spannung, die durch die Werkstoffkennwerte der Streckgrenze und der Dauerschwingfestigkeit ausgedrückt werden, ist für die Herstellung von Schaufeln mit einer größeren longitudinalen, das heißt vom Schaufelfuß zum entgegengesetzten Schaufelende, Erstreckung nötig. Mit der Streckgrenze wird dabei jene Zugspannung bezeichnet, bis zu der das Bauteil keinerlei plastische Verformung zeigt. Jenseits der Streckgrenze, also einer Spannungsbelastung auf Zug die größer ist als die Streckgrenze, wird das Bauteil dauerhaft verformt und somit zerstört. Mit dem Begriff der Dauerschwingfestgkeit wird die maximale dauerhafte Belastung durch eine schwingende Beanspruchung bezeichnet, die ein Bauteil ohne bleibende Schäden ertragen kann.

Derzeit werden Schaufeln für Strömungsmaschinen aus Stangenmaterial oder aus geschmiedeten Rohlingen hergestellt. Es ist bei der Herstellung derartiger Schaufeln für Strömungsmaschinen bekannt, neben den üblichen Stahlwerkstoffen auch Titanlegierungen als Werkstoff zu verwenden. Dadurch kann die ertragbare Spannung der Schaufel erhöht werden. Der Einsatz von Titanlegierungen ist jedoch sehr kostenintensiv und erschwert die Verarbeitung.

Aus der RU 2 381 083 C1 ist ein Verfahren zum Herstellen einer Turbinenschaufel bekannt. Dabei wird in ein Ringprofil ein Dorn zum Erzeugen von zwei symmetrischen Kavitäten eingeführt. Das Ringprofil wird durch Schnitte parallel zur Längsachse des Ringprofils in längliche Segmente aufgeteilt. Aus einem länglichen Segment wird eine Turbinenschaufel herausgearbeitet.

Hinsichtlich der Herstellung hochfester Bauteile ist es ferner bekannt, dass die Streckgrenze und die Dauerschwingfestigkeit durch eine Kaltumformung wesentlich verbessert werden können. Dies wird großtechnisch beispielsweise bei Kappenringen für Turbogeneratoren genutzt, welche im kalten Zustand durch leistungsstarke Pressen aufgeweitet werden. Die bei der Aufweitung auftretenden Zugkräfte, wobei die Aufweitung durch eine Vergrößerung des Innendurchmessers erzielt wird, werden im geschlossenen Ring, und damit tangential zu diesem, aufgenommen. Bei der Kaltumformung wird dabei die Versetzungsdichte im Metall erhöht. Da bei einer Verformung des Bauteils sich die Versetzungen im Bauteil bewegen, sich aber gleichzeitig gegenseitig in ihrer Bewegung behindern, ist bei einer erhöhten Versetzungsdichte eine größere Spannung erforderlich, um das Bauteil zu verformen. Dadurch wird bei der Kaltumformung das Bauteil entlang der anliegenden Spannungen verfestigt. Für longitudinal beanspruchte Bauteile, wie Schaufeln, sind die Abmessungen herkömmlicher kaltumformter Bauteile auf kleine Querschnittflächen beschränkt, da sich die für eine Kaltumformung erforderlichen longitudinalen Zugkräfte nicht in großformatige Bauteile einleiten lassen.

Aufgabe der Erfindung ist es, ein einfaches Verfahren zur Herstellung einer Schaufel einer Strömungsmaschine zu schaffen, wobei die Schaufel eine erhöhte Festigkeit und eine erhöhte ertragbare Spannung aufweist. Insbesondere sollen hochfeste, stabile Schaufeln geschaffen werden, die eine große Schaufellänge haben.

Diese Aufgabe wird erfindungsgemäß durch ein Verfahren zur Herstellung einer Schaufel einer Strömungsmaschine mit den Merkmalen gemäß dem unabhängigen Anspruch 1 der Patentanmeldung gelöst. Weitere Merkmale und Details der Erfindung ergeben sich aus den Unteransprüchen, den Figuren und der Beschreibung.

Gemäß der Erfindung wird die Aufgabe durch ein Verfahren zur Herstellung einer Schaufel einer Strömungsmaschine gelöst. Das Verfahren teilt sich dabei in drei prinzipielle Schritte. In einem ersten Schritt wird in einen hohlprofilförmigen metallischen Körper ein Presswerkzeug eingeführt und der hohlprofilförmige metallische Körper im kalten Zustand durch das Presswerkzeug von innen aufgeweitet. Anschließend wird in einem zweiten Schritt der aufgeweitete hohlprofilförmige metallische Körper durch Auftrennungen parallel oder annähernd parallel zur Längsachse des hohlprofilförmigen metallischen Körpers in längliche Segmente aufgeteilt, wobei jedes Segment zwei stirnseitige Endseiten, eine erste und eine zweite Auftrennseite sowie eine innere Seitenfläche und eine äußere Seitenfläche aufweist. In einem dritten Schritt wird aus einem Segment durch ein zumindest ein Trennverfahren die Schaufel herausgearbeitet, wobei die Schaufel derart aus dem Segment herausgearbeitet wird, dass die Längserstreckung der Schaufel zwischen der ersten und der zweiten Auftrennseite verläuft.

Ein derartiges Verfahren zur Herstellung einer Schaufel einer Strömungsmaschine ermöglicht eine Herstellung einer Schaufel einer Strömungsmaschine aus gängigen Stahlwerkstoffen, wobei die Schaufel eine erhöhte Festigkeit aufweist und dadurch höhere Spannungen ertragen kann. Im ersten Schritt des Verfahrens wird ein Presswerkzeug in den zentralen Hohlraum eines hohlprofilförmigen metallischen, insbesondere aus einem Stahlwerkstoff bestehenden, Körpers eingeführt. Durch das Presswerkzeug werden die Innenseiten des hohlprofilförmigen metallischen Körpers mit einem Druck beaufschlagt, wodurch eine Aufweitung des Körpers durch eine Vergrößerung des Innendurchmessers des Körpers erzielt wird. Der hohlprofilförmige metallische Körper befindet sich dabei in einem kalten Zustand, das heißt die Temperatur des hohlprofilförmigen metallischen Körpers liegt deutlich unterhalb der Rekristallisationstemperatur. Die dabei auftretenden Zugkräfte im hohlprofilförmigen metallischen Körper werden tangential entlang des geschlossenen Hohlprofils aufgenommen. Die Kaltverfestigung durch die Kaltumformung ergibt sich dadurch in tangentialer Richtung senkrecht zur Längsachse des hohlprofilförmigen metallischen Körpers. In einem nächsten Schritt wird der aufgeweitete hohlprofilförmige metallische Körper durch Auftrennungen parallel oder annähernd parallel zur Längsachse des hohlprofilförmigen metallischen Körpers in längliche Segmente aufgeteilt. Die Segmente weisen dadurch jeweils zwei stirnseitige Endseiten auf, die den Endseiten des hohlprofilförmigen metallischen Körpers entsprechen. Entsprechendes gilt für eine innere und eine äußere Seitenfläche, die ebenfalls Teilen der entsprechenden Seitenflächen des hohlprofilförmigen metallischen Körpers entsprechen. Entlang den Auftrennungen entstehen an den Segmenten zwei Auftrennseiten. In einem letzten Schritt wird aus jedem Segment durch zumindest ein Trennverfahren, insbesondere spanabhebende Verfahren, eine Schaufel herausgearbeitet. Bei dem spanenden Umformverfahren handelt es sich beispielsweise um Drehverfahren, Fräsverfahren, Bohren und/oder Schleifprozesse. Selbstverständlich sind auch andere Trennverfahren denkbar. Die Schaufel wird dabei derart aus dem Segment herausgearbeitet, dass die Längserstreckung der Schaufel zwischen der ersten und der zweiten Auftrennseite verläuft. Damit verläuft die Längserstreckung der Schaufel in der Richtung, in der im ersten Schritt, dem Aufweiten des hohlprofilförmigen metallischen Körpers, die Zugkräfte gewirkt haben. Somit ist es möglich, eine Schaufel herzustellen, die in longitudinaler Richtung durch eine Kaltumformung kaltverfestigt wurde. Eine derart hergestellte Schaufel einer Strömungsmaschine weist eine hohe Festigkeit und eine hohe ertragbare Spannung auf. Insbesondere können durch ein derartiges Verfahren Schaufel für Strömungsmaschinen, wie beispielsweise Gasturbinen, Dampfturbinen oder Verdichtern, hergestellt werden, die eine große Schaufellänge aufweisen. Beispielsweise können hochfeste Schaufeln mit einer Länge von 0,5m oder mehr einfach erzeugt werden.

In einer weiteren bevorzugten Ausgestaltung des Verfahrens wird das eine Segment vor dem Herausarbeiten der Schaufel durch eine Auftrennung senkrecht oder annähernd senkrecht zu der ersten und der zweiten Auftrennseite in zumindest zwei Untersegmente aufgeteilt. Die Auftrennung liegt somit in einer Ebene, die zur Längsachse des ursprünglichen hohlprofilförmigen metallischen Körpers senkrecht oder annähernd senkrecht verläuft. Aus jedem einzelnen der so gewonnenen Untersegmente können jeweils Schaufeln nach dem vorherig beschriebenen Verfahren herausgearbeitet werden. Die Untersegmente weisen dabei eine dritte und eine vierte Auftrennseite auf, die den Teilen der ersten und zweiten Auftrennseite des Ursprungsegmentes entsprechen, die am Untersegment noch vorhanden sind. Das Herausarbeiten der Schaufel derart, dass die Längserstreckung der Schaufel zwischen der dritten und der vierten Auftrennseite verläuft, stellt wiederum sicher, dass die Längserstreckung der Schaufel und die Richtung der Zugkräfte beim Aufweiten des ursprünglichen hohlprofilförmigen metallischen Körpers parallel sind. Damit ist es möglich, mit nur einer Aufweitung eines hohlprofilförmigen metallischen Körpers aus jedem Untersegment eines Segmentes eine Schaufel mit den gewünschten Eigenschaften herzustellen. Insgesamt kann durch nur einen Aufweitungsprozess eine große Anzahl von Schaufeln mit den gewünschten Eigenschaften hergestellt werden.

In einer weiteren Ausgestaltung des Verfahrens sind die Außenseite und die Innenseite des hohlprofilförmigen metallischen Körpers im Querschnitt kreisförmig oder regelmäßig gleichvieleckig, insbesondere regelmäßig sechseckig, ausgebildet. Durch die kreisförmige oder regelmäßig gleichvieleckige Ausgestaltung wirkt in allen Radialrichtungen während des Aufweitungsvorganges eine gleiche oder zumindest annähernd gleiche Druckkraft. Dadurch wird der Werkstoff des hohlprofilförmigen metallischen Körpers gleichmäßig belastet, die Kaltumformung und die damit einhergehende Kaltverfestigung werden gleichmäßig in den Werkstoff des hohlprofilförmigen metallischen Körpers eingebracht. Eine gleichbleibende Qualität und eine reproduzierbare Steigerung der Festigkeit des Werkstoffes kann somit über den gesamten Umfang des hohlprofilförmigen metallischen Körpers erreicht werden. Die kreisförmigen Begrenzungen des Querschnitts sind dabei konzentrisch ausgeführt, bei einer gleichvieleckigen Ausführung sind die Seiten der Vielecke der Innen- beziehungsweise der Außenseite zueinander parallel, die Außen- beziehungsweiser die Innenseiten sind konzentrisch um die Längsachse des hohlprofilförmigen metallischen Körpers angeordnet. Insbesondere eine regelmäßig gleichvieleckige Ausgestaltung des hohlprofilförmigen metallischen Körpers ermöglicht ein einfaches gleichmäßiges Aufweiten des hohlprofilförmigen metallischen Körpers mittels eines Presswerkzeuges. Das Presswerkzeug kann auch als Spreizwerkzeug bezeichnet werden. Insbesondere eine vier-, fünf- oder sechseckige Gestalt des hohlprofilförmigen metallischen Körpers ermöglicht, dass eine Vielzahl von länglichen Schaufeln aus diesem mittels des zuvor beschriebenen Verfahrens erzeugt werden können.

In einer besonders bevorzugten Ausgestaltung des Verfahrens wird die Schaufel durch ein Fräs- oder Drehverfahren aus dem Segment beziehungsweise dem Untersegment herausgearbeitet. Durch diese Bearbeitung ist eine Vielzahl von Schaufelgeometrien möglich. Des Weiteren ist es für die Anwendung der Trennverfahren nicht erforderlich, dass der Werkstoff erhitzt wird, insbesondere nicht über die Kristallisationstemperatur hinaus. Die durch die Kaltumformung des hohlprofilförmigen metallischen Körpers erreichte Kaltverfestigung und damit verbundene erhöhte Festigkeit des Materials des Körpers bleibt somit erhalten.

Vorzugsweise umfasst das Material des hohlprofilförmigen metallischen Körpers eine metallische Legierung, insbesondere eine hochwertige Stahllegierung. So kann der hohlprofilförmige metallische Körper und damit die aus diesem hergestellten Schaufeln aus einem Vergütungsstahl hergestellt sein. Denkbar ist auch die Verwendung von Titan oder anderen hochwertigen Materialien.

Durch die Anwendung eines der vorherig beschriebenen Verfahren wird erreicht, dass die so hergestellte Schaufel entlang ihrer Längserstreckung eine erhöhte Festigkeit aufweist. Dadurch ist sie belastbarer, womit im Betrieb eine höhere Drehzahl der Strömungsmaschine, bei der höhere Belastungen entlang der Längserstreckung der Schaufel auftreten können, gefahren werden kann. Desweiteren können die erfindungsgemäßen Schaufeln eine größere longitudinale Erstreckung als herkömmlich gefertigte Schaufeln aufweisen, eine größere überstrichene Fläche ist somit möglich. Die derartig hergestellte Schaufel kann beispielsweise Teil einer Beschaufelung einer Gasturbine, einer Dampfturbine oder eines Verdichters sein. Da alle Schaufeln der Beschaufelung gemäß eines der zuvor beschriebenen Verfahren hergestellt ist, weist die gesamte Beschaufelung eine höhere Belastbarkeit auf. Dadurch kann wiederum die Rotationsgeschwindigkeit der Beschaufelung einer Strömungsmaschine erhöht werden. Zusätzlich können auch die Schaufeln eine größere Längserstreckung aufweisen, wodurch die durch die Beschaufelung überstrichene Fläche vergrößert werden kann.

Eine derart ausgestaltete Strömungsmaschine kann bei höheren Drehzahlen betrieben werden und/oder im Bereich der verwendeten Beschaufelung einen höheren Durchmesser und damit eine höhere überstrichene Fläche aufweisen, als mit Beschaufelungen mit Schaufeln, die nach dem herkömmlichen Herstellungsprinzip hergestellt sind. Durch die höhere Rotationsgeschwindigkeit und/oder die größere überstrichene Fläche kann ein höherer Wirkungsgrad der Strömungsmaschine erreicht werden, so dass die Strömungsmaschine wirtschaftlicher betrieben werden kann.

Die Strömungsmaschine kann als Dampfturbine, Gasturbine, Wasserturbine oder Verdichter ausgebildet sein. Damit ist die Strömungsmaschine vielseitig einsetzbar, auch eine Verwendung als Propeller oder Turbine, zum Beispiel bei einem Flugzeugantrieb, ist denkbar.

Die beigefügten Figuren und die Figurenbeschreibung dienen dem besseren Verständnis des erfindungsgemäßen Verfahrens, Gegenstände oder Teile von Gegenständen, die im Wesentlichen gleich oder ähnlich sind, sind mit denselben Bezugszeichen versehen. Die Figuren sind lediglich eine schematische Darstellung einer möglichen Ausführungsform der Erfindung. Dabei zeigen:
- Fig. 1: eine schematische perspektivische Ansicht eines hohlprofilförmigen metallischen Körpers, aus dem eine Vielzahl von Schaufeln gefertigt werden können,
- Fig. 2: eine schematische perspektivische Ansicht eines in Segmente aufgeteilten hohlprofilförmigen metallischen Körpers,
- Fig. 3: eine perspektivische schematische Ansicht eines Segments nach Auftrennung des hohlprofilförmigen metallischen Körpers,
- Fig. 4,5,6: Projektionen in allen drei Raumrichtungen eines Segments eines aufgetrennten hohlprofilförmigen metallischen Körpers.

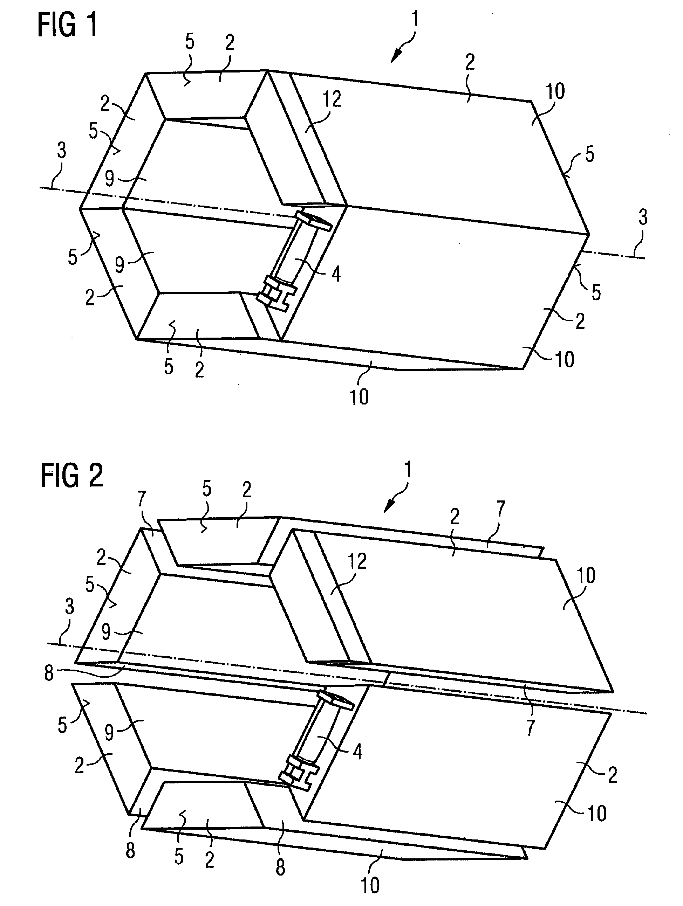

Die Fig. 1 zeigt in einer Projektionsdarstellung einen hohlprofilförmigen metallischen Körper 1 nach dessen Aufweitung durch ein nicht dargestelltes spezielles Presswerkzeug. In der dargestellten Form ist der hohlprofilförmige Körper 1 regelmäßig sechseckig ausgeführt. Dadurch ergeben sich sechs gleiche Segmente 2, deren Trennkanten parallel zur Längsachse 3 des hohlprofilförmigen Körpers 1 verlaufen. Jedes der Segmente 2 verfügt dabei über eine erste stirnseitige Endseite 5 und eine zweite stirnseitige Endseite am gegenüberliegenden Ende des hohlprofilförmigen metallischen Körpers 1. Des Weiteren verfügt jedes Segment 2 über eine innere 9 und eine äußere 10 Seitenfläche. An einem der Segmente 2 ist ein aufzutrennendes Untersegment 12 angedeutet. An einem weiteren Segment 2 ist die Lage der herauszuarbeitenden Schaufel 4 gezeigt. Zur Aufweitung des hohlprofilförmigen metallischen Körpers 1 ist in den durch die Innenseiten 9 begrenzten Hohlraum ein Presswerkzeug eingeführt worden. Das Presswerkzeug wurde dabei koaxial zur Längsachse in den hohlprofilförmigen metallischen Körper 1 eingeführt und hat diesen gleichmäßig aufgeweitet. Dieses Presswerkzeug übt dabei eine Kraft auf den Körper 1 aus, die diesen sternförmig aufweitet. Die dabei auftretenden Zugkräfte werden entlang des Umfanges des hohlprofilförmigen metallischen Körpers 1 gleichmäßig verteilt.

Durch das Presswerkzeug werden die Innenseiten des hohlprofilförmigen metallischen Körpers 1 mit einem Druck beaufschlagt, wodurch eine Aufweitung des Körpers 1 erzielt wird. Der hohlprofilförmige metallische Körper 1 befindet sich dabei in einem kalten Zustand, das heißt die Temperatur des hohlprofilförmigen metallischen Körpers 1 liegt deutlich unterhalb seiner Rekristallisationstemperatur. Die dabei auftretenden Zugkräfte im hohlprofilförmigen metallischen Körper 1 werden tangential entlang des geschlossenen Hohlprofils des Körpers 1 aufgenommen. Die Kaltverfestigung durch die Kaltumformung ergibt sich dadurch in tangentialer Richtung senkrecht zur Längsachse 3 des hohlprofilförmigen metallischen Körpers 1.

In einem nächsten Schritt wird der aufgeweitete hohlprofilförmige metallische Körper 1 durch Auftrennungen parallel oder annähernd parallel zur Längsachse 3 des hohlprofilförmigen metallischen Körpers 1 in längliche Segmente 2 aufgeteilt. Die Segmente 2 weisen dadurch jeweils zwei stirnseitige Endseiten 5 auf, die den Endseiten 5 des hohlprofilförmigen metallischen Körpers 1 entsprechen. Entsprechendes gilt für eine innere und eine äußere Seitenfläche 9, 10, die ebenfalls Teilen der entsprechenden Seitenflächen 9, 10 des hohlprofilförmigen metallischen Körpers 1 entsprechen. Entlang den Auftrennungen entstehen an jedem Segment 2 zwei Auftrennseiten 7, 8. Diese Auftrennseiten 7, 8 eines jeden der sechs Segmente 2 sind in Fig. 2 sichtbar. Deutlich zu erkennen ist, dass die Auftrennseiten 7, 8 eines jeden Segmentes 2 parallel zur Längsachse 3 des hohlprofilförmigen metallischen Körpers 1 verlaufen.

In einem letzten Schritt wird aus jedem Segment 2 durch zumindest ein Trennverfahren, insbesondere spanabhebende Verfahren, eine Schaufel herausgearbeitet. Je nach Größe und Gestalt des hohlprofilförmigen metallischen Körpers 1 können die Segmente 2 in Untersegmente 12 nochmals unterteilt werden. Bei den Trennverfahren handelt es sich beispielsweise um Drehenverfahren, Fräsenverfahren, Bohren und/oder Schleifprozesse. Selbstverständlich sind auch andere spanabhebende Verfahren denkbar. Die Schaufel 4 wird dabei derart aus einem Segment 2 beziehungsweise Untersegment 12 herausgearbeitet, dass die Längserstreckung der Schaufel 4 zwischen der ersten und der zweiten Auftrennseite 7, 8 eines jeden Segmentes 2 beziehungsweise Untersegment es 12 verläuft. Damit verläuft die Längserstreckung einer jeden herausgearbeiteten Schaufel 4 in der Richtung, in der im ersten Schritt, dem Aufweiten des hohlprofilförmigen metallischen Körpers 1, die Zugkräfte gewirkt haben. Somit ist es möglich, eine Schaufel 4 herzustellen, die in longitudinaler Richtung durch eine Kaltumformung kaltverfestigt wurde. Eine derart hergestellte Schaufel 4 einer Strömungsmaschine weist eine hohe Festigkeit und eine hohe ertragbare Spannung auf. Insbesondere können durch ein derartiges Verfahren Schaufel 4 für Strömungsmaschinen, wie beispielsweise Gasturbinen, Dampfturbinen oder Verdichtern, hergestellt werden, die eine große Schaufellänge aufweisen. In den Fig. 1 und 2 ist jeweils angedeutet, wie eine Schaufel 4 aus einen Segment 2 beziehungsweise einem Untersegment 12 eines Segmentes 2 herausgearbeitet wird.

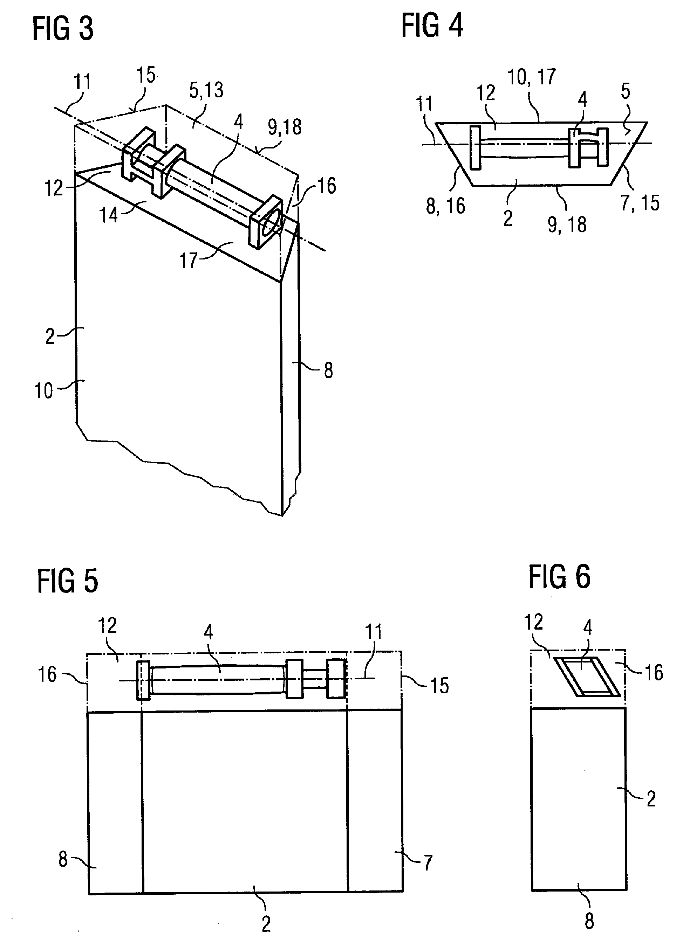

Die Fig. 3 zeigt ein Segment 2, wobei in der gezeigten perspektivischen Ansicht die äußere Seitenfläche 10 und die zweite Auftrennseite 8 des Segments 2 sichtbar sind. Im oberen Teil des Segments 2 ist ein Untersegment 12 angedeutet. In das Untersegment 12 ist eine Schaufel 4 eingezeichnet, so wie sie aus dem Untersegment 12 durch ein zumindest ein Trennverfahren. Insbesondere ein spanabhebendes Verfahren, herausgearbeitet wird. Die Längserstreckung 11 der Schaufel 4 verläuft dabei zwischen der dritten Auftrennseite 15und der vierten Auftrennseite 16 des Untersegmentes 12. Die dritte Auftrennseite 15 ist dabei ein Teil der ersten Auftrennseite 7 eines Segmentes 2, die vierte Auftrennseite 16 ist dabei ein Teil der zweiten Auftrennseite 8 des gleichen Segmentes 2. Die äußere Seitenfläche 17 des Untersegmentes 12 bildet dabei ebenfalls einen Teil der äußeren Seitenfläche 10 des Segmentes 2. Die beiden stirnseitigen Endseiten 13, 14 des Untersegmentes 12 liegen sich, insbesondere parallel, gegenüber, wobei hier die erste stirnseitige Endseite 13 des Untersegmentes 12 identisch ist mit der stirnseitigen Endseite 5 des Segmentes 2. Durch die Lage der Längserstreckung 11 der Schaufel 4 zwischen der dritten Auftrennseite 15 und der vierten Auftrennseite 16, und damit tangential zum Umfang des ursprünglichen hohlprofilförmigen metallischen Körpers 1, wird sichergestellt, dass die durch die Kaltumformung des Körpers 1 in dieser Richtung erfolgte Kaltverfestigung in der Schaufel 4 erhalten bleibt. Sichtbar ist ebenfalls, dass in dieser Ausgestaltung des hohlprofilförmigen metallischen Körpers 1 der Erfindung, das Segment 2 eine deutlich größere Längserstreckung als ein Untersegment 12 aufweist. Durch sukzessive weitere Auftrennung des Segmentes 2 in weitere Untersegmente 12 können daher aus jedem Segment 2 weitere hochfeste Schaufeln 4 hergestellt werden.

In den Fig. 4 bis 6 sind Projektionen des in Figur 3 gezeigten Segmentes 2 abgebildet. Dabei sind die Umrisse des Untersegmentes 12 gestrichelt dargestellt. Fig. 4 zeigt einen stirnseitigen Blick auf das Segment 2. Sichtbar sind dabei das Segment 2 beziehungsweise das Untersegment 12, die Stirnseite 5, die dritte Auftrennseite 15 und vierte Auftrennseite 16, die äußere Seitenfläche 17 und innere Seitenfläche 18 und die in aus dem Untersegment 12 herausarbeitbare Schaufel 4. Die Längserstreckung 11 der Schaufel 4 erstreckt sich zwischen den beiden Auftrennseiten 7, 8 des Segmentes 2 beziehungsweise den beiden Auftrennseiten 15, 16 des Untersegmentes 12 und parallel zu der Innen- beziehungsweise Außenseite 9, 10 des Segmentes 2 beziehungsweise der Innen- beziehungsweise Außenseite 18, 17 des Untersegmentes 12. In Fig. 5 wird eine radiale Projektion von der Längsachse 3 des hohlprofilförmigen metallischen Körpers 1 nach außen gezeigt. Dadurch sind sowohl die erste Auftrennseite 7, als auch die zweite Auftrennseite 8 des Segmentes 2 beziehungsweise die beiden Auftrennseiten 15, 16 des Untersegmentes 12 sichtbar. Am stirnseitigen Ende des Segmentes 2 sind in dem Untersegment 12 die herausgearbeitete Schaufel 4 und deren Längserstreckung 11 gezeigt. Fig. 6 zeigt eine tangentiale Projektion eines Segmentes 2, eines Untersegmentes 12 und einer Schaufel 4. Man blickt dabei direkt auf die zweite Auftrennseite 8 des Segmentes 2 beziehungsweise die vierte Auftrennseite 16 des Untersegmentes 12.

## Patentansprüche

1. Verfahren zur Herstellung einer Schaufel (4) einer Strömungsmaschine, wobei das Verfahren durch folgende Verfahrensschritte gekennzeichnet ist:
a) in einen hohlprofilförmigen metallischen Körper (1) wird ein Presswerkzeug eingeführt und der hohlprofilförmige metallische Körper (1) wird im kalten Zustand durch das Presswerkzeug aufgeweitet,
b) der aufgeweitete hohlprofilförmige metallische Körper (1) wird durch Auftrennungen parallel oder annähernd parallel zur Längsachse (3) des hohlprofilförmigen metallischen Körpers (1) in längliche Segmente (2) aufgeteilt, wobei jedes Segment (2) zwei stirnseitige Endseiten (5), eine erste (7) und eine zweite (8) Auftrennseite, ein innere Seitenfläche (9) und eine äußere Seitenfläche (10) aufweist,
c) aus einem Segment (2) wird durch zumindest ein Trennverfahren die Schaufel (4) herausgearbeitet, wobei die Schaufel (4) derart aus dem Segment (2) herausgearbeitet wird, dass die Längserstreckung (11) der Schaufel (4) zwischen der ersten (7) und der zweiten (8) Auftrennseite verläuft.

2. Verfahren nach Anspruch 1, **dadurch gekennzeichnet, dass** ein Segment (2) durch wenigstens eine Auftrennung senkrecht oder annähernd senkrecht zu der ersten (7) und der zweiten (8) Auftrennseite in zumindest zwei Untersegmente (12) aufgeteilt wird, wobei jedes Untersegment (12) zwei stirnseitige Endseiten (13,14), eine dritte (15) und eine vierte Auftrennseite (16), ein innere Seitenfläche und eine äußere Seitenfläche (16) aufweist, wobei die dritte Auftrennseite (15) durch einen Abschnitt der ersten Auftrennseite (7) des Segmentes (2) und die vierte Auftrennseite (16) durch einen Abschnitt der zweiten Auftrennseite (8) des Segmentes (2) gebildet wird, wobei die Schaufel (4) aus einem Untersegment (12) durch zumindest ein Trennverfahren herausgearbeitet wird, so dass die Längserstreckung (11) der Schaufel (4) zwischen der dritten (15) und der vierten Auftrennseite (16) verläuft.

3. Verfahren nach Anspruch 1 oder 2, **dadurch gekennzeichnet, dass** die Außenseite (8) und die Innenseite (7) des hohlprofilförmigen metallischen Körpers (1) im Querschnitt kreisförmig oder regelmäßig gleichvieleckig, insbesondere regelmäßig sechseckig, ausgebildet sind.

4. Verfahren nach wenigstens einem der Ansprüche 1 bis 3, **dadurch gekennzeichnet, dass** die Schaufel (4) durch ein Fräs- und/oder Drehverfahren herausgearbeitet wird.

5. Verfahren nach wenigstens einem der Ansprüche 1 bis 4, **dadurch gekennzeichnet, dass** der hohlprofilförmige metallische Körper (1) eine metallische Legierung, insbesondere eine Stahllegierung, umfasst.

## Claims

1. Method for producing a blade (4) of a turbomachine, wherein the method is **characterized by** the following method steps:
a) a pressing tool is inserted into a hollow-profile metal body (1) and the hollow-profile metal body (1) is widened in the cold state by means of the pressing tool,
b) the widened hollow-profile metal body (1) is divided into longitudinal segments (2) by means of separations parallel or approximately parallel to the longitudinal axis (3) of the hollow-profile metal body (1), wherein each segment (2) has two end faces (5), a first (7) and a second (8) separation side, an inner side surface (9) and an outer side surface (10),
c) the blade (4) is machined from a segment (2) by means of at least one separation operation, wherein the blade (4) is machined from the segment (2) such that the longitudinal extent (11) of the blade (4) extends between the first (7) and the second (8) separation side.

2. Method according to Claim 1, **characterized in that** a segment (2) is divided into at least two sub-segments (12) by means of at least one separation perpendicular or approximately perpendicular to the first (7) and the second (8) separation side, wherein each sub-segment (12) has two end faces (13, 14), a third (15) and a fourth separation side (16), an inner side surface and an outer side surface (17), wherein the third separation side (15) is formed by a section of the first separation side (7) of the segment (2) and the fourth separation side (16) is formed by a section of the second separation side (8) of the segment (2), wherein the blade (4) is machined from a sub-segment (12) by means of at least one separation operation, such that the longitudinal extent (11) of the blade (4) extends between the third (15) and the fourth separation side (16).

3. Method according to Claim 1 or 2, **characterized in that** the outer side (8) and the inner side (7) of the hollow-profile metal body (1) are designed with a cross section that is circular or in the shape of identical regular polygons, in particular regular hexagons.

4. Method according to at least one of Claims 1 to 3, **characterized in that** the blade (4) is machined by means of a milling operation and/or a turning operation.

5. Method according to at least one of Claims 1 to 4, **characterized in that** the hollow-profile metal body (1) comprises a metal alloy, in particular a steel alloy.

## Revendications

1. Procédé de fabrication d'une aube (4) d'une turbomachine, le procédé étant **caractérisé en ce qu'**il comprend les étapes de procédé suivantes consistant à :
a) introduire un outil de presse dans un corps métallique (1) en forme de profilé creux et élargir à froid le corps métallique (1) en forme de profilé creux grâce à l'outil de presse,
b) partager en segments oblongs (2) le corps métallique (1) en forme de profilé creux élargi selon des séparations de manière parallèle ou approximativement parallèle à l'axe longitudinal (3) du corps métallique (1) en forme de profilé creux, chaque segment (2) présentant deux faces d'extrémité (5) frontales, des première (7) et deuxième (8) faces de séparation, une surface latérale (9) intérieure et une surface latérale (10) extérieure,
c) réaliser l'aube (4) à partir d'un segment (2) grâce à au moins un procédé de séparation, l'aube (4) étant réalisée à partir du segment (2) de sorte que l'extension longitudinale (11) de l'aube (4) est constituée entre les première (7) et deuxième (8) faces de séparation.

2. Procédé selon la revendication 1, **caractérisé en ce qu'**un segment (2) est partagé en au moins deux sous-segments (12) de manière perpendiculaire ou approximativement perpendiculaire aux première (7) et deuxième (8) faces de séparation grâce à au moins une séparation, chaque sous-segment (12) présentant deux faces d'extrémité (13, 14) frontales, des troisième (15) et quatrième (16) faces de séparation, une surface latérale intérieure et une surface latérale extérieure (16), la troisième face de séparation (15) étant formée par une section de la première face de séparation (7) du segment (2) et la quatrième face de séparation (16) étant formée par une section de la deuxième face de séparation (8) du segment (2), l'aube (4) étant réalisée grâce à au moins un procédé de séparation à partir d'un sous-segment (12) de sorte que l'extension longitudinale (11) de l'aube (4) est constituée entre les troisième (15) et quatrième (16) faces de séparation.

3. Procédé selon la revendication 1 ou 2, **caractérisé en ce que** la face extérieure (8) et la face intérieure (7) du corps métallique (1) en forme de profilé creux sont réalisées en coupe transversale en forme de cercle ou de polygone régulier, en particulier d'hexagone régulier.

4. Procédé selon l'une quelconque des revendications 1 à 3, **caractérisé en ce que** l'aube (4) est usinée grâce à un procédé de fraisage et/ou de tournage.

5. Procédé selon l'une quelconque des revendications 1 à 4, **caractérisé en ce que** le corps métallique (1) en forme de profilé creux comprend un alliage métallique, en particulier un alliage d'acier.
